# EUROPÄISCHE PATENTSCHRIFT

(11) **EP 0 265 962 B1**
(45) Veröffentlichungstag und Bekanntmachung des Hinweises auf die Patenterteilung: **13.01.1993**
(21) Anmeldenummer: 87115978.6
(22) Anmeldetag: 30.10.1987
(51) Int. Cl.: B60N 2/48

(54) **Kopfstütze für Kraftfahrzeugsitze**
Head-rest for motor vehicle seats
Appuie-tête pour sièges de véhicule automobile

(30) Priorität: 30.10.1986 DE 3636932
(43) Veröffentlichungstag der Anmeldung: 04.05.1988
(73) Patentinhaber: PETER BUTZ GmbH & Co Verwaltungs-KG, 40764 Langenfeld (DE)
(72) Erfinder: Butz, Otto Eugen, D-4010 Hilden (DE)
(74) Vertreter: Ostriga, Harald

(56) Entgegenhaltungen:
- DE-A- 3 021 122
- DE-A- 3 200 321
- DE-A- 3 327 591
- DE-A- 3 510 863
- DE-U- 8 303 896

## Beschreibung

Die Erfindung betrifft eine Kopfstütze für Kraftfahrzeugsitze, wie sie entsprechend dem Oberbegriff des Patentanspruchs 1 durch die DE-U-8 303 896.5 bekanntgeworden ist.

Die bekannte Kopfstütze weist zwei Führungshülsen auf, welche jeweils auf einem oberen freien Endbereich einer Tragstange gleitverschieblich und feststellbar angeordnet sind. Jedes untere Tragstangenende ist lösbar im oberen Bereich einer Arretierhülse befestigt, welche wiederum in der Sitzlehnen-Tragkonstruktion gehaltert ist. Bei der bekannten Kopfstütze sind also die beiden Tragstangen raumfest, während der Polsterträger an Lagerzapfen der Gleithülsen neigeverstellbar gehalten und so mittels der Gleithülsen auf- und abverschieblich auf den beiden Tragstangen angeordnet ist.

Da die Metalloberflächen der Tragstangenbereiche zwischen der Unterseite des Polsterkörpers und der Sitzlehnenoberseite frei sichtbar sind, ist das Bedürfnis nach einer Tragstangenumhüllung entstanden, welche eine bessere Anpassung an das äußere Erscheinungsbild von Kopf- und Sitzpolster gestattet, zugleich aber den besonderen Sicherheitsanforderungen entgegenkommt, die an eine Kraftfahrzeug-Kopfstütze zu stellen sind. Dieses Bedürfnis, welches zugleich die der Erfindung zugrunde liegende Aufgabe widerspiegelt, wurde, ausgehend von der DE-U-8 303 896.5, entsprechend dem Kennzeichenteil des Patentanspruchs 1 gelöst.

Hiernach weist auf oder bildet die Führungshülse einen zug-, druck und biegefest angeschlossenen unteren formsteifen Fortsatz, welcher auf der Tragstange gleitgeführt ist. Der Fortsatz ist nach Art eines Innenteleskoprohres in jeder Höhenlage des Polsterträgers mit einem unteren axialen Längenbereich in der Arretierhülse aufgenommen und von dieser an seiner Außenmantelfläche gleitgeführt. Die Tragstange hingegen ist mit ihrem unteren Endbereich sitzlehnenseitig, beispielsweise im unteren Ende der Arretierhülse selbst, gehalten.

Auf die vorbeschriebene erfindungsgemäße Weise stellt die Tragstangenverkleidung, nämlich der formsteife Führungshülsenfortsatz, selbst einen Bestandteil des Kopfstützen-Führungssystems dar. Insbesondere nimmt der Fortsatz als Innenteleskoprohr die in die Tragstange eingeleiteten Querkräfte auf und gibt diese über die Gleitführungsverbindung an die sitzlehnenseitig verankerte Arretierhülse weiter.

Zugleich ist der erfindungsgemäße Fortsatz bei Ausbildung gemäß den Merkmalen des Anspruchs 8 in der Lage, eine torsionssteife Brücke zwischen der benachbarten Führungshülse und der Arretierhülse auszubilden. Dies ist besonders dann wichtig, wenn z.B. bei einer Rahmenkopfstütze keine Möglichkeit besteht, beide Tragstangen zur Entlastung torsionsgefährdeter Befestigungsstellen in den Bereichen Kopfpolsterträger und Sitzlehne über einen oberen Querbügel zu sichern.

Da der erfindungsgemäße Fortsatz ein von der zugehörigen Tragstange gesondertes Bauteil bildet, besteht die grundsätzliche Möglichkeit einer Anpassung der Oberfläche des Fortsatzes an die des Kopfpolsters oder des Sitzes.

Vorzugsweise bildet jeder Fortsatz ein Kunststoffspritzgußteil, welches beispielsweise eine genarbte und ansprechend farblich gestaltete Oberfläche aufweisen kann. Zusätzliche Variationsmöglichkeiten ergeben sich in diesem Zusammenhang entsprechend der Erfindung dann, wenn der Fortsatz ein von der Führungshülse gesondertes Bauteil bildet, welches z.B. mittels einer Rastverbindung an der betreffenden Führungshülse befestigt ist.

Eine Tragstangenverkleidung ist von einer nicht zu engeren Gattung zählenden Kopfstütze an sich bekannt (s. DE-C-2 703 866). Diese vorbekannte Tragstangenverkleidung ist indes Bestandteil eines Schaumstoffbezuges und somit nicht in der Lage, kraftübertragend im Kopfstützen-Führungssystem mitzuwirken.

Auch die Tragstangenverkleidung gemäß der DE-A-3 510 863 führt nicht zum Ziel. Die dort vorgesehene schlauchartige Tragstangenverkleidung bildet ein die Tragstange mit einem Ringspalt umgebendes Kaschierrohr, welches auf den oberen Rand einer sitzlehnenseitigen Arretierhülse aufgeklipst, also wie die Tragstange raumfest angeordnet ist. Da der untere Bereich der Führungshülse nur im unteren Verstellbereich in das Kaschierrohr eintaucht, ist die Tragstangenverkleidung gemäß der DE-A-3 510 863 - ebenso wie die Tragstangenverkleidung der vorerwähnten DE-A-2 703 866 - nicht in der Lage, kraftübertragend im Kopfstützen-Führungssystem mitzuwirken.

Weitere vorteilhafte Erfindungsmerkmale sind zusätzlichen Unteransprüchen zu entnehmen.

In den Zeichnungen ist ein bevorzugtes Ausführungsbeispiel entsprechend der Erfindung näher dargestellt, es zeigen,
Fig. 1a einen Vertikalschnitt durch eine erfindungsgemäße Kopfstütze für Kraftfahrzeugsitze mit angedeuteter Sitzlehne (in etwas verkleinerter Darstellung); die Kopfstütze nimmt ihre maximale Höhen-Einstellposition ein;
Fig. 1b die Kopfstütze gemäß Fig. 1a, jedoch bei verminderter Höhen-Einstellposition;
Fig. 2 einen Fortsatz gemäß Fig. 1 etwa in natürlicher Größe, teils im Vertikalschnitt, teils in Ansicht,
Fig. 3 eine Draufsicht auf die obere Stirnseite eines Führungshülsen Fortsatzes und
Fig. 4 und 5 Radialschnitte durch den Fortsatz entsprechend den Schnittlinien IV-IV und V-V in Fig. 2.

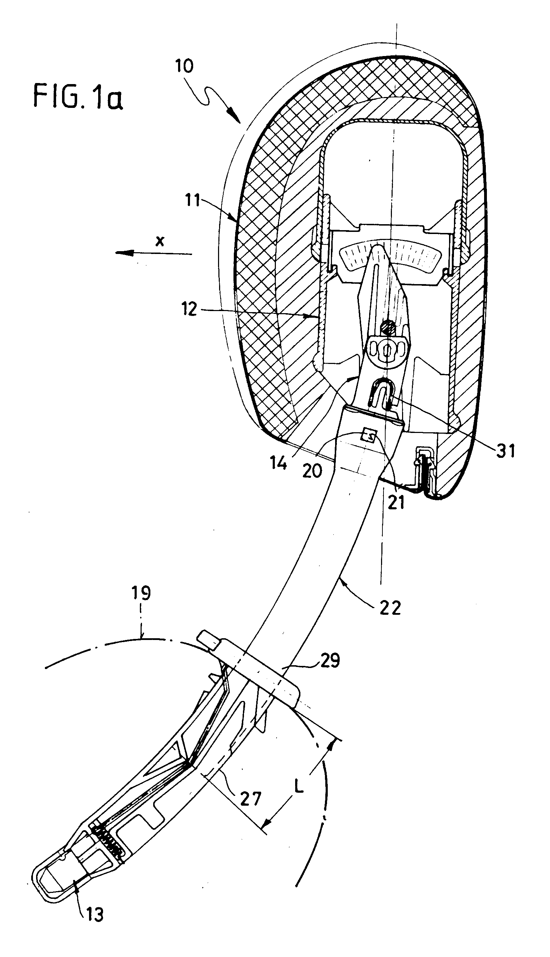

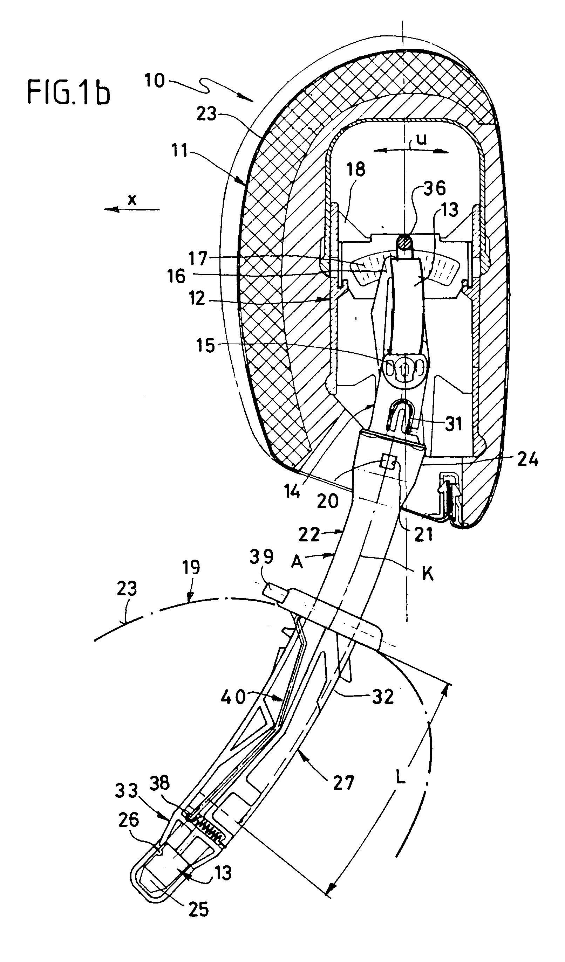

In den Fig. 1a und 1b ist eine Kopfstütze für Kraftfahrzeugsitze mit der Bezugsziffer 10 bezeichnet.

Die Kopfstütze 10 weist einen von einem Polsterkörper 11 umgebenen Polsterträger 12 auf, welcher mittels zweier Tragstangen 13 (nur eine ist sichtbar) an einer auf der Tragstange 13 gleit- und feststellbaren Führungshülse 14 gehalten ist.

Jede Führungshülse 14 (siehe insbesondere Fig. 1b) ist mit zwei quer zur Fahrtrichtung x beiderseits vorstehenden Drehlagerzapfen 15 (nur einer ist in den Fig. 1a und 1b sichtbar) versehen, welche in nicht dargestellte Lageröffnungen des Polsterträgers 12 eingreifen. Auf diese Weise ist der Polsterträger 12 mitsamt dem Polsterkörper 11 entlang dem mit u bezeichneten Doppelpfeil schwenk- bzw. neigeverstellbar. Zur Arretierung der Neigestellung dient ein Rastsystem, und zwar ein Rastfinger 16 der Führungshülse 14 und ein beispielsweise aus Federstahl bestehendes Rastsegment 17, welches jeweils innenseitig einer Seitenwange 18 des Polsterträgers 12 befestigt ist.

An ihrem jeweils der Sitzlehne 19 zugewandten unteren Endbereich ist eine jede Führungshülse 14 mit zwei quer zur Fahrtrichtung x seitlich vorstehenden Rastnocken 20 versehen, welche in je eine Rastaussparung 21 im oberen Endbereich 24 eines Fortsatzes 22 praktisch unlösbar eingreifen. Es besteht so eine zug- und druckfeste Verbindung zwischen Führungshülse 14 und Fortsatz 22. Von der obenen Stirnfläche 37 des Fortsatzes 22 ausgehende und zu den Rastaussparungen 21 führende der Längsmittelachse K zugeneigte Einlaufschrägen 34 erleichtern während der Montage das Einführen und Einrasten der Rastnocken 20 in den Rastaussparungen 21. Rastaussparungen 21 und Rastnocken 20 sind an diametral gegenüberliegenden Umfangsstellen der Teile 22, 14 angeordnet.

Die Führungshülse 14 besteht aus einem bruchfesten glasfaserverstärkten Kunststoff und stellt insgesamt ein hart-zähes Spritzgußteil dar. Der Fortsatz 22 bildet ebenso wie die Führungshülse 14 ein Kunststoffspritzgußteil aus widerstandsfähigem Werkstoff, braucht jedoch nicht glasfaserarmiert zu sein. Die nach außen weisende Oberfläche des Fortsatzes 22 kann dem textilen Bezugsstoff 23 der Kopfstütze 10 bzw. der Sitzlehne 19 farblich angepaßt und mit einer strukturierten, z.B. lederartig genarbten, Oberfläche versehen sein.

Der Fortsatz 22 stellt ein von der Führungshülse 14 gesondertes Bauteil dar und übergreift den unteren Endbereich der Führungshülse 14 steckmuffenartig (und zwar biegesteif) mit seinem oberen Bereich 24.

Da die Außenkontur des Querschnittes im unteren Bereich der Führungshülse 14 und die Innenkontur im Bereich 24 des Fortsatzes 22 gemeinsam eine steckschlüsselartig ineinandergreifende Überlappungszone ergeben, besteht zwischen der Führungshülse 14 und dem Fortsatz 22 nicht nur eine zug-, druck und biegefeste Rastverbindung 20, 21, sondern zusätzlich noch eine drehfeste Verbindung bezüglich der Längsmittelachsen K.

Die Tragstange 13 ist mit ihrem unteren Ende 25 über eine lösbare Rastverbindung mittels einer nicht sichtbaren Tragstangen-Rastkerbe zug- und druckfest mit dem unteren Bereich 33 einer Arretierhülse 27 verbunden, welche wiederum in nicht dargestellter Weise in der Sitzlehnen-Tragkonstruktion verankert ist. Und zwar greift ein Raststeg 38 eines mittels einer Taste 39 lösbaren Sperrbügels 40 in die nicht sichtbare Rastkerbe der Tragstange 13 ein. Die nicht sichtbare etwas höher gelegene Rastkerbe gleicht der aus Sicherheitsgründen vorgesehenen zusätzlichen untersten Rastkerbe 26.

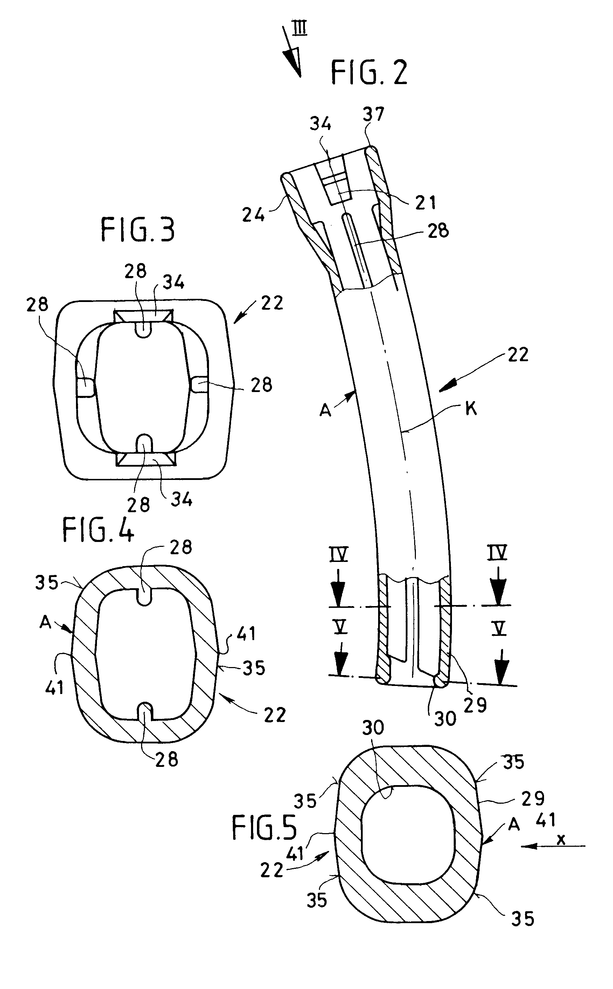

Die Tragstange 13 durchsetzt ansonsten den rohrartigen Fortsatz 22 und ist dort an axialen Gleitführungsrippen 28 (siehe auch Fig. 2) im wesentlichen spielfrei geführt. Im unteren Bereich 29 des Fortsatzes 22 ist ein nach innen vorspringender Umfangswulst 30 vorgesehen, welcher auf Teilen seiner Umfangslänge für eine hinreichende Radialführung der Tragstange 13 sorgt.

Wie bereits weiter oben erwähnt, ist die Führungshülse 14 auf der Tragstange 13 gleitverschieblich angeordnet. Eine lösbare Höhenarretierung zwischen Führungshülse 14 und raumfest in der Sitzlehne 19 gehaltener Tragstange 13 erfolgt über einen Rastfederschenkel 31 an der Führungshülse 14, welcher mit nicht dargestellten tragstangenseitigen Rast- und Verstellkerben zusammenwirkt.

Bei der Veränderung der Höhenlage (Tieferstellen der Kopfstütze 10) von Fig. 1a zu Fig. 1b ist der untere Bereich 29 des Fortsatzes 22 je nach Höhenlage stets mit einem mehr oder weniger großen axialen Längenbereich L wie ein Innenteleskoprohr in der Höhlung die Arretierhülse 27 aufgenommen und dort gleitgeführt. Anhand der Fig. 4 und 5 ist erkennbar, daß die äußere Querschnittskontur des Fortsatzes 22 unrund ist. Die innere Querschnittskontur im oberen Bereich 32 der Arretierhülse 27, also dem Teleskopbereich zwischen dem Fortsatz 22 und der Arretierhülse 27, ist ebenfalls korrespondierend unrund.

Es ergibt sich so eine Gleitführung zwischen der Außenmantelfläche A des Fortsatzes 22 und der nicht gezeigten Innenmantelfläche der Arretierhülse 27, welche aufgrund ihrer korrespondierenden unrunden Ausbildung zugleich eine drehfeste Verbindung zwischen dem Fortsatz 22 und der Arretierhülse 27 ergibt. Die Außenmantelfläche A weist mehrere ebene Teilflächen 35 auf.

Auf diese Weise ist vorstellbar, daß auf die Kopfstütze 10 einwirkende Kräfte (z.B. entgegen der Fahrtrichtung x) sowohl hinsichtlich ihrer Querkraftkomponente als auch hinsichtlich ihrer Torsionskomponente sicher im Gleitbereich zwischen dem Fortsatz 22 und der Arretierhülse 27 übertragen werden können.

Es wird nun auch deutlich, daß der Fortsatz 22 eine formsteife Brücke zwischen einer jeden Führungshülse 14 und einer jeden Arretierhülse 27 bildet. Diese Brücke ist in der Lage, Torsionskräfte zu übertragen. In diesem Zusammenhang wäre es selbstverständlich auch vorstellbar, zur Erzielung einer Torsionskraftübertragung zwischen Tragstange 13 und Fortsatz 22 zusätzlich auch die Tragstange 13 mit einem unrunden Querschnitt zu versehen.

Zu erwähnen bleibt noch, daß beide Tragstangen 13 über einen Kopfbügel 36 in einem definierten Abstand zueinander gehalten und zugleich auch durch diesen gegen Torsion um ihre Längsachsen K gesichert sind.

Anhand von Fig. 1b wird in Verbindung mit Fig. 2 bei Betrachtung der strichpunktierten und mit K bezeichneten Linie deutlich, daß die Mittellängsachsen der Führungshülse 14, der Tragstange 13, des Fortsatzes 22 und der Arretierhülse 27 einem gemeinsamen Kreisbogen, nämlich dem Kreisbogen K, folgen. Auf diese Weise ist eine ungehinderte Relativbewegung zwischen den Tragstangen 13 und den Fortsätzen 22 einerseits sowie zwischen den Fortsätzen 22 und den Arretierhülsen 27 andererseits möglich.

Selbstverständlich ist es grundsätzlich auch möglich, die Führungshülsen 14, die Tragstangen 13, die Fortsätze 22 und die Arretierhülsen 27 hinsichtlich ihrer Längsmittelachsen gradlinig auszubilden.

Die Außenmantelfläche A des Fortsatzes 22 weist zwei etwa dachfirstartige Gleitführungsflächen 41 auf, die zwei benachbarte Bereiche 35 der z.B. lederartig genarbten Außenmantelfläche A von der nicht dargestellten, eine Gegengleitfläche bildenden Innenwandung der Arretierhülse 27 distanzieren können.

## Patentansprüche

1. Kopfstütze (10) für Kraftfahrzeugsitze, mit einem von einem Polsterkörper (11) umgebenen Polsterträger (12), welcher mittels einer auf je einer Tragstange (13) gleit- und feststellbaren Führungshülse (14) gehalten ist, wobei mindestens eine Tragstange (13) vorgesehen ist, welche sitzlehnenseitig ggf. lösbar gegen Axialverschiebung arretiert ist und von oben her in eine innerhalb der Sitzlehne (19) befestigte Arretierhülse (27) eingreift, dadurch gekennzeichnet, daß die Tragstange (13) nur an ihrem der Sitzlehnenoberseite (bei 19) abgewandten unteren Endbereich (25) gegen Axialverschiebung arretiert ist und daß die Führungshülse (14) einen unteren, die Tragstange (13) im sichtbaren Bereich umhüllenden, formsteifen Fortsatz (22) aufweist, welcher auf der Tragstange (13) gleitgeführt ist und welcher nach Art eines Innenteleskoprohrs in jeder Höhenlage des Polsterträgers (12) mit einem unteren axialen Längenbereich (L) in der Arretierhülse (27) aufgenommen und von dieser gleitgeführt ist.

2. Kopfstütze nach Anspruch 1, dadurch gekennzeichnet, daß das untere Ende (bei 25) der Tragstange (13) im unteren Ende (bei 33) der Arretierhülse (27) gehalten ist.

3. Kopfstütze nach Anspruch 1, oder nach Anspruch 2, dadurch gekennzeichnet, daß der Fortsatz (22) ein gesondertes Bauteil bildet, welches am unteren Ende der ihm zugeordneten Führungshülse (14) befestigt ist.

4. Kopfstütze nach Anspruch 3, dadurch gekennzeichnet, daß Fortsatz (22) und Führungshülse (14) über eine Rastverbindung (20, 21) aneinander befestigt sind.

5. Kopfstütze nach Anspruch 3 oder nach Anspruch 4, dadurch gekennzeichnet, daß der Fortsatz (22) das untere Ende der Führungshülse (14) steckmuffenartig übergreift.

6. Kopfstütze nach einem der Ansprüche 3 bis 5, dadurch gekennzeichnet, daß Fortsatz (22) und Führungshülse (14) mittels einer steckschlüsselartigen Überlappungszone bezüglich ihrer Längsmittelachse (K) drehfest miteinander gekuppelt sind.

7. Kopfstütze nach einem der Ansprüche 1 bis 6, dadurch gekennzeichnet, daß der Fortsatz (22) zu seiner Führung auf der Tragstange (13) mindestens drei mit etwa gleichem Umfangsabstand voneinander angeordnete nach innen vorspringende Axial-Führungsrippen (28) aufweist.

8. Kopfstütze nach einem der Ansprüche 1 bis 7, dadurch gekennzeichnet, daß die innere Querschnittskontur im oberen Bereich (32) - Teleskopbereich - der Arretierhülse (27) und die äußere Querschnittskontur (A) des im oberen Bereich der Arretierhülse (27) teleskopierbaren Fortsatzes (22) korrespondierend zueinander unrund sind.

9. Kopfstütze nach Anspruch 8, dadurch gekennzeichnet, daß der Fortsatz (22) mit ebenen Außenmantelflächen (35) an korrespondierenden Innenmantelflächen der Arretierhülse (27) geführt ist.

10. Kopfstütze nach einem der Ansprüche 1 bis 9, dadurch gekennzeichnet, daß die Außenmantelfläche (A) des Fortsatzes (22) mindestens eine etwa streifen- oder dachfirstartige schmale axiale Gleitführungsfläche (41) bildet, der zwei benachbarte Bereiche (35) der Außenmantelfläche (A) von der Innenwandung der Arretierhülse (27) distanziert.

11. Kopfstütze nach einem der Ansprüche 1 bis 10, dadurch gekennzeichnet, daß der Fortsatz (22) ein Kunststoffspritzgußteil ist.

12. Kopfstütze nach einem der Ansprüche 1 bis 11, dadurch gekennzeichnet, daß die einander koaxialen Mittellängsachsen von Führungshülse (14), Fortsatz (22), Tragstange (13) und Arretierhülse (27) einem gemeinsamen Kreisbogen (K) folgen.

## Claims

1. Head restraint (10) for motor vehicle seats, having an upholstery carrier (12) which is surrounded by an upholstery body (11) and is held by means of a guide sleeve (14), which is slidable and lockable on in each case one support rod (13), with at least one support rod (13) being provided which at the seat back rest end is locked, possibly releasably, against axial displacement and engages from above into a locking sleeve (27) fastened inside the seat back rest (19), characterized in that the support rod (13) is locked against axial displacement only at its bottom end region (25) remote from the top of the seat back rest (at 19), and that the guide sleeve (14) has, surrounding the support rod (13) in the visible region, a dimensionally stable bottom extension (22) which is slidingly guided on the support rod (13) and of which a bottom axial longitudinal region (L), in each vertical position of the upholstery carrier (12), is received in the manner of an inner telescopic tube in, and is slidingly guided by, the locking sleeve (27).

2. Head restraint according to claim 1, characterized in that the bottom end (at 25) of the support rod (13) is held in the bottom end (at 33) of the locking sleeve (27).

3. Head restraint according to claim 1 or according to claim 2, characterized in that the extension (22) forms a separate component which is fastened on the bottom end of the guide sleeve (14) associated therewith.

4. Head restraint according to claim 3, characterized in that extension (22) and guide sleeve (14) are fastened to one another via a detent connection (20, 21).

5. Head restraint according to claim 3 or according to claim 4, characterized in that the extension (22) engages in the manner of a socket over the bottom end of the guide sleeve (14).

6. Head restraint according to one of claims 3 to 5, characterized in that extension (22) and guide sleeve (14) are coupled to one another in a torsion-resistant manner as regards their longitudinal centre line (K) by means of a socket-spanner-like overlap zone.

7. Head restraint according to one of claims 1 to 6, characterized in that the extension (22), for its guidance on the support rod (13), has at least three inwardly projecting axial guidance ribs (28) disposed at approximately the same peripheral distance from one another.

8. Head restraint according to one of claims 1 to 7, characterized in that the internal cross-sectional contour in the upper region (32) - telescopic region - of the locking sleeve (27) and the external cross-sectional contour (A) of the telescopic extension (22) in the upper region of the locking sleeve (27) are non-circular in a manner which corresponds one to the other.

9. Head restraint according to claim 8, characterized in that the extension (22) is guided by plane external surface areas (35) on corresponding internal surface areas of the locking sleeve (27).

10. Head restraint according to one of claims 1 to 9, characterized in that the external surface area (A) of the extension (22) forms at least one narrow axial slideway surface (41) approximately like a strip or the ridge of a roof, which distances two adjacent regions (35) of the external surface area (A) from the inner wall of the locking sleeve (27).

11. Head restraint according to one of claims 1 to 10, characterized in that the extension (22) is an injection moulded plastic part.

12. Head restraint according to one of claims 1 to 11, characterized in that the coaxial longitudinal centre lines of guide sleeve (14), extension (22), support rod (13) and locking sleeve (27) follow a common circular arc (K).

## Revendications

1. Appuie-tête (10) pour sièges de véhicules automobiles, comprenant un support de coussin (12) enveloppé d'un corps de coussin (11), qui est tenu au moyen d'un manchon de guidage (14) qu'on peut faire coulisser et immobiliser sur sa tige porteuse (13), dans lequel il est prévu au moins une tige porteuse (13) qui est arrêtée en coulissement axial, éventuellement par une liaison démontable, par rapport au dossier du siège, et est engagée de haut en bas dans un manchon d'arrêt (27) fixé à l'intérieur du dossier (19),
caractérisé en ce que la tige porteuse (13) est bloquée à l'encontre du coulissement axial, uniquement dans sa région terminale inférieure (25) la plus éloignée du côté supérieur du dossier (en 19), et en ce que le manchon de guidage (14) présente un prolongement inférieur rigide (22) qui enveloppe la tige porteuse (13) dans la région visible, qui est guidé coulissant sur la tige porteuse (13) et qui est contenu et guidé à coulissement dans le manchon d'arrêt (27) par sa région longitudinale axiale inférieure (L), à la façon d'un tube télescopique intérieur, dans chaque position en hauteur du support de coussin (12).

2. Appuie-tête selon la revendication 1,
caractérisé en ce que l'extrémité inférieure (en 25) de la tige porteuse (13) est tenue dans l'extrémité inférieure (en 33) du manchon d'arrêt (27).

3. Appuie-tête selon la revendication 1 ou selon la revendication 2,
caractérisé en ce que le prolongement (22) forme un élément distinct qui est fixé à l'extrémité inférieure du manchon de guidage (14) qui lui est associé.

4. Appuie-tête selon la revendication 3,
caractérisé en ce que le prolongement (22) et le manchon de guidage (14) sont fixés l'un à l'autre par un assemblage à verrouillage (20, 21).

5. Appuie-tête selon la revendication 3 ou selon la revendication 4,
caractérisé en ce que le prolongement (22) recouvre à la façon d'une emboîture l'extrémité intérieure du manchon de guidage (14).

6. Appuie-tête selon une des revendications 3 à 5,
caractérisé en ce que le prolongement (22) et le manchon de guidage (14) sont couplés l'un à l'autre solidairement par rapport à leur axe longitudinal médian (K) au moyen d'une zone de recouvrement du type clé à canon.

7. Appuie-tête selon une des revendications 1 à 6,
caractérisé en ce que le prolongement (22) présente, pour son guidage sur la tige porteuse (13), au moins trois nervures de guidage axiales (28) en saillie vers l'intérieur, disposées à des intervalles circonférentiels à peu près égaux.

8. Appuie-tête selon une des revendications 1 à 7,
caractérisé en ce que le profil intérieur de la section transversale dans la région supérieure (32) - région télescopique - du manchon d'arrêt (27) et le profil extérieur de section (A) du prolongement (22) qui peut s'emmancher télescopiquement dans la région supérieure du manchon d'arrêt sont de forme non circulaire.

9. Appuie-tête selon la revendication 8,
caractérisé en ce que le prolongement (22) est guidé par des surfaces latérales extérieures planes (35) sur des surfaces latérales intérieures correspondantes du manchon d'arrêt (27).

10. Appuie-tête selon une des revendications 1 à 9,
caractérisé en ce que la surface latérale extérieure (A) du prolongement (22) forme au moins une surface axiale étroite (41) à peu près en forme de bande ou de faîte de toit, qui maintient deux régions voisines (35) de la surface latérale extérieure (A) à distance de la paroi intérieure du manchon d'arrêt (27).

11. Appuie-tête selon une des revendications 1 à 10,
caractérisé en ce que le prolongement (22) est une pièce en matière plastique moulée par injection.

12. Appuie-tête selon une des revendications 1 à 11,
caractérisé en ce que les axes médians longitudinaux du manchon de guidage (14), du prolongement (22), de la tige porteuse (13) et du manchon d'arrêt (27), qui sont mutuellement coaxiaux, suivent un arc de cercle commun (K).
